# EUROPÄISCHE PATENTSCHRIFT

(11) **EP 1 676 169 B1**
(45) Veröffentlichungstag und Bekanntmachung des Hinweises auf die Patenterteilung: **18.09.2019**
(21) Anmeldenummer: 04790819.9
(22) Anmeldetag: 25.10.2004
(51) Int. Cl.: G02C 7/06

(54) **BILDSCHIRMARBEITSPLATZGLAS**
WORKPLACE SCREEN LENS
VERRE DE PLACE DE TRAVAIL SUR ECRAN

(30) Priorität: 23.10.2003 DE 10349726
(43) Veröffentlichungstag der Anmeldung: 05.07.2006
(73) Patentinhaber: Rodenstock GmbH, 80687 München (DE)
(72) Erfinder: ALTHEIMER, Helmut, 87650 Baisweil-Lauchdorf (DE); ESSER, Gregor, 81735 München (DE); HAIMERL, Walter, 80337 München (DE); WEHNER, Edda, 82275 Emmering (DE); WELK, Andrea, 81547 München (DE)
(74) Vertreter: Müller-Boré & Partner Patentanwälte PartG mbB
(86) Internationale Anmeldenummer: PCT/EP2004/012032
(87) Internationale Veröffentlichungsnummer: WO 2005/040894

(56) Entgegenhaltungen:
- EP-A- 0 627 647
- EP-A- 1 429 172
- US-A- 5 272 495
- US-A- 5 864 380
- US-A1- 2001 030 735
- US-A1- 2003 128 331
- US-B1- 6 390 623

## Beschreibung

Die Erfindung bezieht sich auf ein Bildschirmarbeitsplatzglas und die Verwendung eines Bildschirmarbeitsplatzglases .

Aufgrund der kleiner gewordenen Fassungsmode findet man Gleitsichtgläser mit kurzer Progression inzwischen bei diversen Glasherstellern im Produktportfolio. Auch Gläser, die für spezielle Anwendungen im Raumbereich und am Arbeitsplatz konzipiert sind, werden inzwischen häufig angeboten, Diese Gläser sind nach den unterschiedlichsten Gesichtspunkten in Bezug auf ihre Einsatzmöglichkeiten bzw. Sehbereiche konzipiert (s. Tab, 1).

**Tabelle 1:**

| Maximale Sehentfernung für scharfes Sehen im oberen Bereich des Brillenglases | Minimale Sehentfernung für scharfes Sehen in der Nähe | Produktbeispiele |
|---|---|---|
| Unendlich | ca. 50 cm | Technica (AO), Datacomfort (Essilor), Hoyalux Tact (Hoya) |
| Zwischen ca 1,3 m und ca. 2,1 m (Raumbereich) | Ca. 50 cm | Gradal RD (Zeiss), Cosmolit Office (Rodenstock), Intermezzo (Optovision)/Mono Profi (Metzler), Sola Access (Blank)¹ |
| Zwischen ca 1,0 m und ca. 0,70 m (Bildschirm und Vorlage) | Ca. 40 cm | Cosmolit P (Rodenstock), Delta (Essilor) |

| | | |
|---|---|---|
| ¹: Progressives Flächendesign entspricht dem Access von Sola | | |

Aus der EP 1 429 172 A1 ist ein Gleitsichtglas bekannt, bei dem sich die Länge eines Zwischenkanals im Bereich zwischen 22 mm und 28 mm befindet und ein Klarsichtbereich, der als ein Bereich mit einem Astigmatismus von 0,5 Dioptrien oder weniger definiert ist, eine maximale horizontale Weite im Fernbereich hat, die höchstens dem zweifachen der minimalen horizontalen Weite im Zwischenkanal entspricht.

Die US 6,390,623 B1 offenbart ein Bildschirmarbeitsplatzglas mit einem auf das Sehen in Raumentfernungen ausgelegten Bereich und einem auf das Sehen in kürzere Entfernungen, insbesondere zum Ablesen von Tastatur und Vorlage ausgelegten Bereich.

Ein ähnliches Bildschirmarbeitsplatzglas ist aus der US 5,864,380 bekannt.

Ein weiteres Bildschirmarbeitsplatzglas offenbart die US 2003/0128331 A1.

Auch die US 2001/0030735 A1 zeigt ein Bildschirmarbeitsplatzglas.

Ferner ist in der EP 0 627 647 A2 ein Bildschirmarbeitsplatzglas offenbart.

Darüber hinaus offenbart die US 5,272,495 ein Bildschirmarbeitsplatzglas.

In Deutschland gibt es ca. 20 Millionen Bildschirmarbeitsplätze und es kommen sowohl im gewerblichen als auch im privaten Bereich stets neue hinzu. An 20-35% aller Bildschirmarbeitsplätze sitzen presbyope Benutzer. Doch nicht nur am Bildschirmarbeitsplatz, sondern auch bei vielen anderen Tätigkeiten in Beruf und Haushalt ergeben sich für die presbyopen Brillenträger ähnliche Sehanforderungen, die sich auf den erweiterten Nahbereich beziehen. Diese Sehanforderungen sind vergleichbar mit den Ansprüchen an das Sehen bei Bildschirmarbeit und können somit mit einem solchen Glas auch komfortabler gelöst werden. Diese Sehanforderungen umfassen im Hauptdurchblicksbereich ein deutliches Sehen in der weiteren Umgebung bis über 2 m (Verstärkung der für die Korrektion der Fehlsichtigkeit in der Ferne nötigen Fernkorrektion um ca. +0.50 dpt). Im mittleren Bereich soll das Glas die erforderliche Wirkung und möglichst große Sehfelder für eine Objektentfernung zwischen 60-90 cm haben. Dieser Bereich soll im Glas so angeordnet sein, daß er dem Benutzer beim Durchblick durch das Glas eine ergonomisch optimale Kopf- und Körperhaltung zum Beispiel bei der Arbeit am Bildschirm ermöglicht. Im unteren Bereich des Glases soll der Wirkungsanstieg in einer stabilen Nahzone enden, die für die üblichen Sehanforderungen in der Nähe wie Lesen oder die Benutzung einer Tastatur geeignet ist.

Besonders im Zwischenbereich, d.h. bei der für den Bildschirmbenutzer hauptsächlich notwendigen Sehaufgabe, muß bei einem normalen Gleitsichtglas der Kopf leicht angehoben werden, da für diese Entfernung bereits durch die Progressionszone geblickt werden muß. Das ist unbequem und führt zu Verspannungen im Nackenbereich. Ein speziell nach ergonomischen Gesichtspunkten konzipiertes Glas ermöglicht ermüdungsfreies Arbeiten am Bildschirmarbeitsplatz.

In diesem Bereich gibt es bis jetzt noch kein Produkt mit entsprechend starker Wirkungsänderung in vertikaler Richtung, das eine geringe Progressionslänge hat und somit auch für die Verglasung kleiner Fassungen verwendet werden kann.

Aufgabe dieser Erfindung ist es, ein Bildschirmarbeitsplatzglas anzugeben, das in Bezug auf die Sehbereiche ein komfortables Sehen am Arbeitsplatz zuläßt und zudem eine kurze Progressionslänge hat, d.h. für die Verglasung kleiner, modischer Fassungen geeignet ist.

Die Aufgabe der Erfindung wird durch das Bildschirmarbeitsplatzglas gemäß Anspruch 1 und die Verwendung eines Bildschirmarbeitsglases gemäß Anspruch 8 gelöst. Bevorzugte Ausführungsformen der vorliegenden Erfindung sind Gegenstand der abhängigen Ansprüche.

Raumentfernung im Sinne dieser Erfindung bedeutet eine Entfernung von dem Brillenglas von bevorzugt etwa 1,0 m bis etwa 3,0 m, besonders bevorzugt von etwa 1,3 m bis etwa 2,1 m. Liegt eine Sehentfernung für scharfes Sehen in Raumentfernung bedeutet dies im Sinne der Erfindung, daß in einer Entfernung bevorzugt von etwa 1,0 m bis etwa 3,0 m, besonders bevorzugt von etwa 1,3 m bis etwa 2,1 m von dem Brillenglas, scharfes Sehen möglich ist, d.h. ein Objekt in dieser Entfernung von dem Brillenglas von dem Träger des Brillenglases bzw. dessen Auge fokussiert werden kann.

Der Begriff Nahsehzone ist im Sinne dieser Erfindung gleichbedeutend mit Nahteil. Bei einer Nahsehzone bzw. einem Nahteil handelt es sich um den Teil eines Gleitsicht- bzw. progressiven Brillenglases, welcher für ein Sehen in der Nähe ausgelegt ist. In anderen Worten ist das Brillenglas derart ausgelegt, daß beim Blicken durch die Nahsehzone bzw. den Nahteil des Brillenglases, Objekte, wie Beispielsweise eine Tastatur oder Papierseite, auf einem Tisch in einer Entfernung von dem Brillenglas vorzugsweise zwischen etwa 10 cm bis etwa 60 cm, besonders bevorzugt zwischen etwa 25 cm bis etwa 50 cm, im wesentlichen scharf gesehen werden können. Insbesondere bedeutet eine stabilisierte Nahsehzone, daß sich der Wert der Wirkung des Bildschirmarbeitsplatzglases im wesentlichen nicht ändert, d.h. im wesentlichen konstant ist. In anderen Worten ändert sich der Wert der Wirkung des Bildschirmarbeitsplatzglases ausgehend vom Fernbezugspunkt in Richtung zum Nahbezugspunkt hin, nach Erreichen des Nahbezugspunktes, ab einem Wert der y Koordinate von etwa -12mm im wesentlichen nicht mehr. Besonders bevorzugt ist eine Änderung des Werts der Addition bzw. eines Nahzusatzes, d.h. der Wirkung im Bereich der Nahsehzone, geringer als etwa 20%, besonders bevorzugt geringer als etwa 10% bis zu einer gedachten Glasunterkante bei y= -20 mm.

Ein Bereich in kürzeren Entfernungen im Sinne dieser Erfindung bedeutet Entfernungen bevorzugt von etwa 50 cm bis etwa 100 cm, besonders bevorzugt von etwa 60 cm bis etwa 90 cm. Liegt eine Sehentfernung für scharfes Sehen in kürzerer Entfernung bedeutet dies im Sinne der Erfindung, daß in einer Entfernung bevorzugt von etwa 50 cm bis etwa 100 cm, besonders bevorzugt von etwa 60 cm bis etwa 90 cm scharfes Sehen möglich ist, d.h. ein Objekt, wie beispielsweise ein Computerbildschirm, in dieser Entfernung fokussiert werden kann. Befindet sich ein Objekt, wie beispielsweise ein Computerbildschirm, welcher einen Text darstellt, in kürzeren bzw. kurzen Entfernungen im Sinne dieser Erfindung, befindet sich der Computerbildschirm vorzugsweise etwa in einer derartigen Distanz zu einer Person, daß die Person den Text lesen kann. Insbesondere ist scharfes Sehen in einem Bereich in kürzerer Entfernungen beim Blicken durch die Progressionszone des Brillenglases möglich.

Das Bildschirmarbeitsplatzglas ist insbesondere für Sehentfernungen zwischen etwa 60 cm bis etwa 90 cm optimiert, d.h., daß insbesondere für Sehentfernungen zwischen etwa 60 cm bis etwa 90 cm scharfes Sehen möglich ist. Insbesondere sind die optischen Eigenschaften des Bildschirmarbeitsplatzglas derart, daß in der Glasmitte eine Fehlsichtigkeit des Trägers des Bildschirmarbeitsplatzglases insbesondere für Sehentfernungen zwischen etwa 60 cm bis etwa 90 cm ausgeglichen wird, was in etwa einer herkömmlichen Distanz von einem Auge zu einem Computerbildschirm entspricht.

Sehentfernung im Sinne dieser Erfindung ist gleichbedeutend mit der Entfernung eines Objekts, das betrachtet bzw. gesehen wird, von dem Brillenglas.

Die Glasmitte des Bildschirmarbeitsplatzglases entspricht im wesentlichen einem Bereich des Bildschirmarbeitsplatzglases von y gleich etwa -4 mm bis y gleich etwa +4 mm und von x gleich etwa -6 mm, vorzugsweise in einem temporalen Glasbereich, bis x gleich etwa +8 mm, vorzugsweise in einem nasalen Glasbereich, welcher den Glasmittelpunkt bei x gleich etwa 0 mm und y gleich etwa 0 mm umfaßt. Vorzugsweise entspricht die Glasmitte somit einem Bereich des Bildschirmarbeitsplatzglases, welcher in etwa bei einer Blicksenkung von etwa 10° bezüglich Nullblickrichtung zu finden ist.

Der Begriff Nabellinie im Sinne dieser Erfindung ist gleichbedeutend mit dem Begriff Nabelpunktlinie, wobei es sich bei einer Nabelpunktlinie um eine Linie handelt, welche aus einer dichten Anordnung von Nabelpunkten besteht. Bei einem Nabelpunkt handelt es sich vorzugsweise um einen Punkt auf einer Fläche, in welchem beide Hauptkrümmungen gleich sind. Das den Nabelpunkt umgebende Flächenelement ist also sphärisch, d.h. der Flächenastigmatismus ist gleich Null. Eine sphärische Fläche besteht folglich aus lauter Nabelpunkten, eine rotationssymmetrische Asphäre hingegen weist lediglich einen Nabelpunkt auf. Eine torische Fläche besitzt keinen Nabelpunkt. Für eine Nabelpunktlinie bzw. eine Nabellinie folgt daher, daß entlang der Nabelpunktlinie bzw. Nabellinie kein Flächenastigmatismus vorliegt. Grundsätzlich ist entlang der Nabellinie eine hohe Sehschärfe möglich.

Der Ausdruck Sehkanal wird im Sinne dieser Erfindung synonym mit Progressionskanal verwendet. Progressionskanal bzw. Sehkanal im Sinne dieser Erfindung ist ein Bereich eines progressiven Brillenglases, welcher scharfes Sehen für Entfernungen ermöglicht, welche zwischen der Ferne und der Nähe liegen, wobei mit Ferne in diesem Patent die Raumentfernung, d.h. die Entfernung von dem Brillenglas von bevorzugt etwa 1,0 m bis etwa 3 m, besonders bevorzugt von etwa 1,3 m bis etwa 2,1 m, bedeutet.

Insbesondere handelt es sich bei dem Sehkanal bzw. dem Progressionskanal um einen Bereich des Bildschirmarbeitsplatzglases, welcher von den Astigmatismus-Isolinien einem Wert von 0,25 dpt begrenzt wird, d.h. zwischen den Astigmatismus-Isolinien entsprechend einem Wert von 0,25 dpt liegt und die Hauptlinie enthält. In anderen Worten, schneidet eine Verbindungsline, welche die beiden, den Sehkanal begrenzenden Astigmatismus-Isolinien verbindet, die Hauptlinie. Der größte Teil des Progressionskanals hat Astigmatismuswerte kleiner als 0,25 dpt.
Der Sehkanal weist in der Nähe eine Breite von mindestens 15 mm auf. In anderen Worten hat der Sehkanal in der Nahsehzone, besonders bevorzugt bei einer y Koordinate, welche im wesentlichen der y Koordinate des Nahbezugspunktes entspricht, eine horizontale Breite von etwa 15mm. In der vorliegenden Erfindung entspricht die Breite der horizontalen Breite, welche bei einer konstanten y Koordinate gemessen wird. In anderen Worten wird im wesentlichen die Länge in der x-y-Ebene einer horizontalen Linie gemessen, welche die beiden Seiten des Sehkanals verbindet. Insbesondere bedeutet dies im Sinne der Erfindung, daß der horizontale Abstand zweier gegenüberliegender Astigmatismus-Isolinien, d.h. zweier Linien mit gleichem Astigmatismuswert, welche den Sehkanal definieren, und welche sich auf gegenüberliegenden Seiten der Hauptlinie befinden, im Nahteil zumindest etwa 15 mm beträgt.

Deutliches Sehen im Sinne dieser Erfindung bedeutet im wesentlichen scharfes Sehen. In anderen Worten wird ein Objekt, welches deutlich gesehen werden kann, im wesentlichen scharf abgebildet, d.h. mit einem Visus von vorzugsweise mindestens etwa 80%, besonders bevorzugt mindestens etwa 90%. Insbesondere bedeutet deutliches Sehen in die weitere Umgebung im Sinne dieser Erfindung insbesondere, daß ein Objekt welches sich in einer Entfernung befindet, in welcher das Bildschirmarbeitsplatzglas nicht für scharfes sehen ausgelegt ist, d.h. optimiert ist, noch im wesentlichen scharf gesehen werden kann.

Die Unterschiede zwischen den einzelnen Produkten vom Stand der Technik (Tabelle 1) lassen sich im Vergleich zu einem Glas gemäß dieser Erfindung an der Änderung der mittleren Wirkung in Gebrauchsstellung und an dem zugehörigen Abstand der beiden Punkte, zwischen denen diese Wirkungsänderung erzielt wird, kennzeichnen. Die maximale Wirkungsänderung entlang der gewundenen Hauptlinie ist die Differenz der maximalen Wirkung im Nahbereich des Brillenglases und der minimalen Wirkung im oberen Bereich des Brillenglases, gemessen in dpt.

Die Verträglichkeit des Glaskonzeptes hängt nun nicht nur vom Betrag der Wirkungsänderung alleine ab, sondern ebenso auch von der Distanz, auf der diese Wirkungsänderung im Brillenglas erreicht wird. Diese Distanz ist definiert als der vertikale Abstand im Brillenglas, gemessen in mm, über den die maximale Wirkungsänderung erreicht wird. Um diese beiden Parameter, durch die sich die Unterschiede zwischen den bestehenden Brillenglaskonzepten darstellen lassen, nun zusammenzufassen, führt man die so genannte Änderungskennzahl ein.

Diese Änderungskennzahl ist definiert als der Quotient aus der maximalen Wirkungsdifferenz und dem Abstand der Wirkungsänderung. Sie beschreibt die Gesamtänderung der Wirkung über die Progressionslänge und wird in dpt/mm angegeben.

Wie aus Tabelle 2 hervorgeht, sind herkömmliche Arbeitsplatzgläser dadurch charakterisiert, daß sie Änderungskennzahlen unter 0,065 dpt/mm aufweisen. Im Gegensatz dazu weisen Arbeitsplatzgläser gemäß der Erfindung Änderungskennzahlen größer als 0,07 dpt/mm auf. Als Beispiel wurden in Tabelle 2 Gläser mit einer Addition von ca. 2,0 dpt gewählt.

**Tabelle 2:**

| Produktname | Wirkungsdifferenz [dpt] | Abstand, über den Wirkungsänderung erzielt wird [mm] | Wirkungsänderung pro mm (Änderungs kennzahl) |
|---|---|---|---|
| Hoyalux Tact | 2,4 | 37 | 0,065 |
| Datacomfort | 2,4 | 38 | 0,063 |
| AO Technica | 2,0 | 34 | 0,059 |
| Gradal RD | 1,7 | 32 | 0,053 |
| Delta | 0,9 | 38 | 0,02 |
| Sola Access | 1,3 | 23 | 0,057 |
| Cosmolit P | 1,7 | 39 | 0,044 |
| Cosmolit Office | 2,1 | 48 | 0,044 |
| Glas gemäß der Erfindung | 2,0 | 22-24 | 0,091-0,083 |

In Tabelle 3 sind verschiedene Parameter von Gläsern vom Stand der Technik und dem Glas gemäß der Erfindung gegenübergestellt.

**Tabelle 3:**

| Produkt | Add [dpt] | max. grad D [dpt /mm] | I [mm] | HPL [mm] | Min Breite Sehkanal [mm] | Breite Sehkanal bei y= 0 [mm] | Breite Sehkanal Nähe bei y =-12 [mm] |
|---|---|---|---|---|---|---|---|
| Office 1.0 | 0.92 | 0.07 5 | 48 | 14 | 4.6 | 11.1 | 7.0 |
| Office 1.75 | 1.55 | 0.12 2 | 47 | 14.5 | 4.6 | 11.0 | 8.0 |
| EP 0 911 670 Fig. 2-4 | 1.0 | 0.08 5 | 20 | 12.4 | 3.5 | 3.9 | 6.5 |
| EP 0 911 670 Fig. 6-8 | 2.0 | 0.16 7 | 20 | 12 | 4.0 | 4.7 | 8.0 |
| EP 0 911 670 Fig. 9-11 | 3.0 | 0.25 | 20 | 12 | 3.9 | 4.3 | 8.5 |
| Erfindung | 1.6 | 0.14 7 | 24 | 9,5 | 4.5 | 4.6 | 15.5 |

Die Progressionslänge I ist definiert als der vertikale Abstand zwischen den Punkten auf der Hauptlinie, die den größten und kleinsten Flächenbrechwert aufweisen, Diese Punkte sollten üblicherweise im oberen Teil bei ca. 10 bis 20 mm und im unteren Teil bei etwa -10 bis etwa -20 mm liegen. Die Addition Add ist die Differenz der Brechwerte in diesen beiden Punkten.
Im Gegensatz dazu wird die Hauptprogressionslänge HPL (wie in den Patenten EP 0 911670 - EP 0 911673) aus dem Quotienten der Addition und dem maximalen Brechwertgradienten max. grad D berechnet.

Die Sehkanalbreite wird definiert als horizontaler Abstand zwischen den Isolinien des Flächenastigmatismus, die dem Wert von Addition/3 entsprechen. Dies ist eine willkürliche Festlegung, um die Sehkanalbreite zu normieren und sie damit in Unabhängigkeit von der Addition zu bringen.

Ferner wird auch auf die Definition herkömmlicher Fachbegriffe verwiesen, wie sie in den einschlägigen Normen, insbesondere der Norm DIN EN ISO 13666:1998 angegeben sind.

Die Erfindung wird nachstehend ohne Beschränkung des allgemeinen Erfindungsgedankens unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:

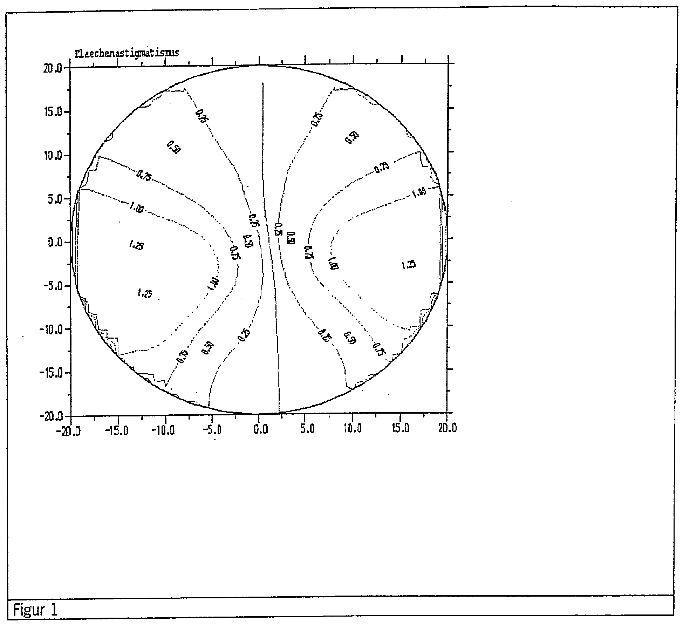

- Figur 1:: Flächenastigmatismus

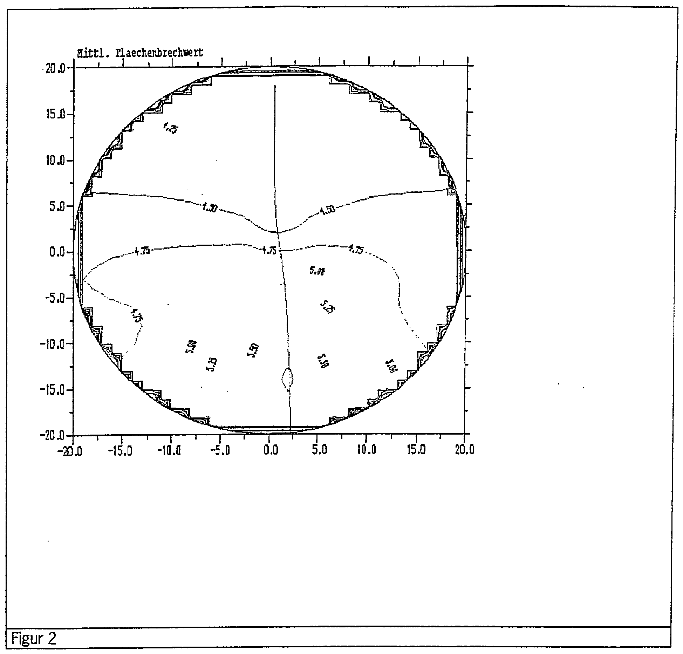

- Figur 2:: Mittlerer Flächenbrechwert

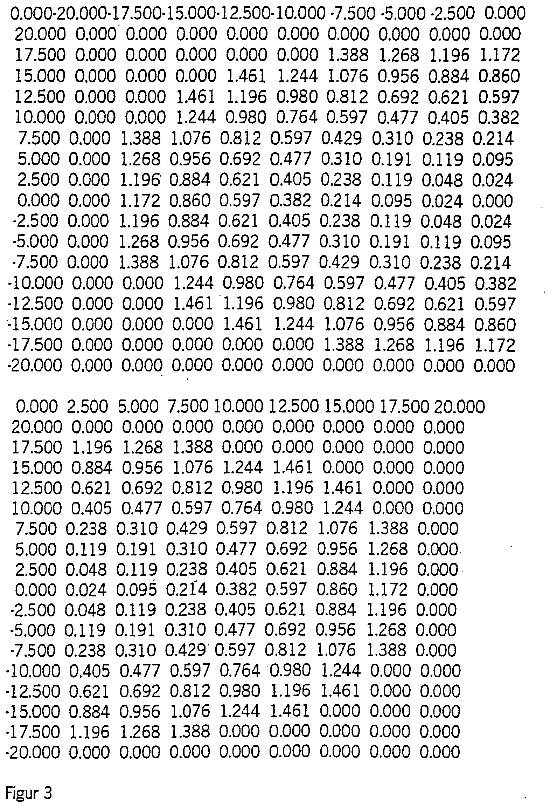

- Figur 3:: Pfeilhöhen

Insbesondere umfaßt die vorliegende Erfindung ein Bildschirmarbeitsplatzglas mit
- einem auf das Sehen in Raumentfernungen ausgelegten Bereich(Fernteil),
- einem auf das Sehen in kürzere Entfernungen, insbesondere zum Ablesen von Tastatur und Vorlage ausgelegten Bereich (Nahteil), und
- einer zwischen Fernteil und Nahteil angeordneten Progressionszone, die speziell auf das Sehen am Bildschirm abgestimmt ist und in der die Wirkung des Brillenglases von dem Wert in dem im Fernteil gelegenen Fernbezugspunkt auf den Wert des im Nah-teil gelegenen Nahbezugspunktes kontinuierlich längs einer zur Nase hin gewundenen Kurve (Hauptlinie), die keine Nabellinie ist, zunimmt,
dadurch gekennzeichnet, daß
- das Bildschirmarbeitsplatzglas in der Glasmitte für die mittleren Sehentfernungen von 60 cm bis 90 cm optimiert ist;
- der Progressionskanal in der Glasmitte eine Breite von mindestens 4 mm aufweist,
- die Wirkung von der Glasmitte bei der vertikalen Koordinate y= 0 nach unten hin zunimmt und nach Erreichen des Nahbezugspunktes bei y= -12 mm eine stabilisierte Nahsehzone mit im wesentlichen konstanter Wirkung erreicht,
- der Progressionskanal in der Nahsehzone am Nahbezugspunkt eine Breite von mindestens 15 mm aufweist,
- die Wirkung von der Glasmitte aus nach oben bis y= +10 bis +12 mm über der Glasmitte abnimmt und ein deutliches Sehen in die weitere Umgebung des Arbeitsplatzes bzw. eine gute Raumorientierung ermöglicht,
- die Progressionslänge ungefähr 20-25 mm beträgt,
- die Hauptprogressionslänge zwischen 7 und 12 mm liegt und
- die minimale Breite des Progressionskanals mindestens 4 mm beträgt.

Mit etwas anderen Worten weist das Bildschirmarbeitsplatzglas insbesondere auf:
- einen auf das Sehen in Raumentfernungen ausgelegten Bereich, nachfolgend Fernteil genannt,
- einen auf das Sehen in kürzere Entfernungen, insbesondere zum Ablesen von Tastatur und Vorlage ausgelegten Bereich, nachfolgend Nahteil genannt, und
- eine zwischen Fernteil und Nahteil angeordneten Progressionszone, die speziell auf das Sehen am Bildschirm abgestimmt ist und in der die Wirkung des Brillenglases von dem Wert in dem im Fernteil gelegenen Fernbezugspunkt auf den Wert des im Nahteil gelegenen Nahbezugspunktes kontinuierlich längs einer zur Nase hin gewundenen Kurve, nachfolgend Hauptlinie genannt, die keine Nabellinie ist, zunimmt.

Das Bildschirmarbeitsplatzglas ist in der Glasmitte für die mittleren Sehentfernungen von etwa 60 cm bis etwa 90 cm optimiert Der Progressionskanal in der Glasmitte weist eine Breite von mindestens 4 mm auf. Die Wirkung nimmt von der Glasmitte bei der vertikalen Koordinate y etwa gleich 0 nach unten hin zu und erreicht bei y etwa gleich -12 mm eine Nahsehzone mit im wesentlichen konstanter Wirkung. Der Progressionskanal in der Nahsehzone, am Nahbezugspunkt, weist eine Breite von mindestens 15 mm auf. Die Wirkung nimmt von der Glasmitte aus nach oben bis y etwa gleich +10 bis etwa gleich +12 mm über der Glasmitte ab. Die Progressionslänge beträgt etwa 20 mm bis etwa 25 mm. Die Hauptprogressionslänge liegt zwischen etwa 7 und etwa 12 mm. Und die minimale Breite des Progressionskanals beträgt mindestens 4 mm.

Das Bildschirmarbeitsplatzglas kann zur Korrektur eines optischen Sehfehlers eines Benutzers verwendet werden.

## Patentansprüche

1. Bildschirmarbeitsplatzglas mit einem Fernteil, einem Nahteil und einer zwischen dem Fernteil und dem Nahteil angeordneten Progressionszone, die speziell auf das Sehen am Bildschirm abgestimmt ist und in der die Wirkung des Brillenglases von dem Wert eines im Fernteil gelegenen Fernbezugspunktes auf den Wert eines im Nahteil gelegenen Nahbezugspunktes kontinuierlich längs einer zur Nase hin gewundenen Kurve, nachfolgend Hauptlinie genannt, die keine Nabellinie ist, zunimmt, wobei:
- die Wirkung von der Glasmitte bei der vertikalen Koordinate y etwa gleich 0 nach unten zum Nahbezugspunkt hin zunimmt und nach Erreichen des Nahbezugspunktes bei y etwa gleich -12 mm eine Nahsehzone mit im wesentlichen konstanter Wirkung erreicht;
- das Bildschirmarbeitsplatzglas einen Progressionskanal aufweist, welcher eine Progressionskanalbreite in der Glasmitte von mindestens 4 mm und eine Progressionskanalbreite in der Nahsehzone am Nahbezugspunkt von mindestens 15 mm aufweist, wobei die minimale Progressionskanalbreite mindestens 4 mm beträgt und wobei die Progressionskanalbreiten jeweils als horizontaler Abstand zwischen den Isolinien des Flächenastigmatismus, die dem Wert von Addition/3 entsprechen, definiert sind;
- die Wirkung von der Glasmitte aus nach oben bis y etwa gleich +10 mm bis etwa gleich +12 mm über der Glasmitte abnimmt;
- das Bildschirmarbeitsplatzglas eine Progressionslänge von etwa 20 mm bis etwa 25 mm aufweist, wobei die Progressionslänge den vertikalen Abstand zwischen den Punkten auf der Hauptlinie darstellt, die den größten und kleinsten Flächenbrechwert aufweisen; und
- das Bildschirmarbeitsplatzglas eine Hauptprogressionslänge von etwa 7 mm bis etwa 12 mm aufweist, wobei die Hauptprogressionslänge durch den Quotienten der Addition, bei der es sich um die Differenz der Brechwerte in den Punkten auf der Hauptlinie, die den größten und kleinsten Flächenbrechwert aufweisen, handelt, und des maximalen Brechwertgradientens auf der Hauptlinie gegeben ist.

2. Bildschirmarbeitsplatzglas nach Anspruch 1, **dadurch gekennzeichnet, daß** die Änderungskennzahl, die als der Quotient aus der maximalen Wirkungsdifferenz und dem Abstand der Wirkungsänderung definiert ist, größer als 0,07 dpt/mm ist.

3. Bildschirmarbeitsplatzglas nach einem der vorangegangenen Ansprüche, wobei der Progressionskanal in der Glasmitte eine Breite von mindestens 4,5 mm aufweist.

4. Bildschirmarbeitsplatzglas nach einem der vorangegangenen Ansprüche, wobei der Progressionskanal in der Nähe eine Breite von mindestens 15,5 mm aufweist.

5. Bildschirmarbeitsplatzglas nach einem der vorangegangenen Ansprüche, wobei die Hauptprogressionslänge zwischen etwa 7 und etwa 10 mm liegt.

6. Bildschirmarbeitsplatzglas nach einem der vorangegangenen Ansprüche, wobei die minimale Breite des Progressionskanals mindestens 4,5 mm beträgt.

7. Bildschirmarbeitsplatzglas nach einem der vorangegangenen Ansprüche, wobei die Wirkungsänderung durch die Änderung des Flächenbrechwertes auf der Vorderfläche oder auf der Rückfläche oder auf Vorder- und Rückfläche erreicht wird.

8. Verwendung eines Bildschirmarbeitsplatzglases zur Korrektur eines optischen Sehfehlers eines Benutzers, mit einem Fernteil, einem Nahteil und einer zwischen dem Fernteil und dem Nahteil angeordneten Progressionszone, die speziell auf das Sehen am Bildschirm abgestimmt ist und in der die Wirkung des Brillenglases von dem Wert eines im Fernteil gelegenen Fernbeztigspunktes auf den Wert eines im Nahteil gelegenen Nahbezugspunktes kontinuierlich längs einer zur Nase hin gewundenen Kurve, nachfolgend Hauptlinie genannt, die keine Nabellinie ist, zunimmt, wobei:
- die Wirkung von der Glasmitte bei der vertikalen Koordinate y etwa gleich 0 nach unten zum Nahbezugspunkt hin zunimmt und nach Erreichen des Nahbezugspunktes bei y etwa gleich -12 mm eine Nahsehzone mit im wesentlichen konstanter Wirkung erreicht;
- das Bildschirmarbeitsplatzglas einen Progressionskanal aufweist, welcher eine Progressionskanalbreite in der Glasmitte von mindestens 4 mm und eine Progressionskanalbreite in der Nahsehzone am Nahbezugspunkt von mindestens 15 mm aufweist, wobei die minimale Progressionskanalbreite mindestens 4 mm beträgt und wobei die Progressionskanalbreiten jeweils als horizontaler Abstand zwischen den Isolinien des Flächenastigmatismus, die dem Wert von Addition/3 entsprechen, definiert sind;
- die Wirkung von der Glasmitte aus nach oben bis y etwa gleich +10 mm bis etwa gleich +12 mm über der Glasmitte abnimmt;
- das Bildschirmarbeitsplatzglas eine Progressionslänge von etwa 20 mm bis etwa 25 mm aufweist, wobei die Progressionslänge den vertikalen Abstand zwischen den Punkten auf der Hauptlinie darstellt, die den größten und kleinsten Flächenbrechwert aufweisen; und
- das Bildschirmarbeitsplatzglas eine Hauptprogressionslänge von etwa 7 mm bis etwa 12 mm aufweist, wobei die Hauptprogressionslänge durch den Quotienten der Addition, bei der es sich um die Differenz der Brechwerte in den Punkten auf der Hauptlinie, die den größten und kleinsten Flächenbrechwert aufweisen, handelt, und des maximalen Brechwertgradientens auf der Hauptlinie gegeben ist.

## Claims

1. Workplace glass with a distance zone, a near vision zone and a progression zone arranged between the distance portion and the near portion, which is specially tailored to the vision on the screen and wherein the effect of the lens increases continuously from the value of a distant reference point, lying within the distance portion to the value of a near reference point, lying within the near portion, wherein the effect increases continuously along a curve, which is twisted towards the nose and is hereinafter called main line, which is not a navel line, wherein:
- the effect increases from the center of the glass at the vertical coordinate y approximately equal to 0 down to the near reference point and, after reaching the near reference point at y approximately equal to -12 mm, achieves a near vision zone with a substantially constant effect;
- the workplace glass has a progressive corridor having a progressive corridor width in the glass center of at least 4 mm and a progressive corridor width in the near vision zone at the near reference point of at least 15 mm, wherein the minimum progressive corridor width is at least 4 mm and wherein the progressive corridor widths are in each case defined as horizontal distance between the isolines of the surface astigmatism corresponding to the value of addition / 3;
- the effect decreases from the center of the glass up to y approximately equal to +10 mm to approximately equal to +12 mm above the glass center;
- the workplace glass has a progression length of about 20 mm to about 25 mm, the progression length representing the vertical distance between the points on the main line having the largest and smallest surface refractive values; and
- the workplace glass has a major progression length of about 7 mm to about 12 mm, the major progression length being the addition quotient, which is the difference in refractive powers at the points on the main line having the largest and smallest surface refractive values, and the maximum refractive index gradient on the main line.

2. Workplace glass according to claim 1, **characterized in that** the change index, which is defined as the quotient of the maximum difference in effect and the distance of the change in effect, is greater than 0.07 dpt / mm.

3. Workplace glass according to one of the preceding claims, wherein the progression corridor in the center of the glass has a width of at least 4.5 mm.

4. Workplace glass according to one of the preceding claims, wherein the progression corridor has a width of at least 15.5 mm in the vicinity.

5. Workplace glass according to one of the preceding claims, wherein the main progression length is between about 7 and about 10 mm.

6. Workplace glass according to one of the preceding claims, wherein the minimum width of the progression corridor is at least 4.5 mm.

7. Workplace glass according to one of the preceding claims, wherein the change in effect is achieved by the change in the surface power value on the front surface or on the rear surface or on the front and rear surface.

8. Use of a workplace glass to correct a visual vision defect of a user, with a distance zone, a near vision zone and a progression zone arranged between the distance portion and the near portion, which is specially tailored to the vision on the screen and wherein the effect of the lens increases continuously from the value of a distant reference point, lying within the distance portion to the value of a near reference point, lying within the near portion, wherein the effect increases continuously along a curve, which is twisted towards the nose and is hereinafter called main line, which is not a navel line, wherein:
- the effect increases from the center of the glass at the vertical coordinate y approximately equal to 0 down to the near reference point and, after reaching the near reference point at y approximately equal to -12 mm, achieves a near vision zone with a substantially constant effect;
- the workplace glass has a progressive corridor having a progressive corridor width in the glass center of at least 4 mm and a progressive corridor width in the near vision zone at the near reference point of at least 15 mm, wherein the minimum progressive corridor width is at least 4 mm and wherein the progressive corridor widths are in each case defined as horizontal distance between the isolines of the surface astigmatism corresponding to the value of addition / 3;
- the effect decreases from the center of the glass up to y approximately equal to +10 mm to approximately equal to +12 mm above the glass center;
- the workplace glass has a progression length of about 20 mm to about 25 mm, the progression length representing the vertical distance between the points on the main line having the largest and smallest surface refractive values; and
- the workplace glass has a major progression length of about 7 mm to about 12 mm, the major progression length being the addition quotient, which is the difference in refractive powers at the points on the main line having the largest and smallest surface refractive values, and the maximum refractive index gradient on the main line.

## Revendications

1. Verre de poste de travail avec une zone de distance, une zone de proximité et une zone de progression disposées entre la zone de distance et la zone de proximité, spécialement adapté à la vision sur l'écran et dans lequel l'effet de la lentille augmente de façon continue à partir de la valeur d'un point de référence distant, situé dans la zone de distance à la valeur d'un point de référence proche, situé dans la zone de proximité, dans lequel l'effet augmente de manière continue le long d'une courbe torsadée vers le nez, appelée ci-après ligne principale, qui n'est pas une ligne de nombril, dans laquelle:
- l'effet augmente du centre du verre à la coordonnée verticale y approximativement égal à 0 jusqu'au point de référence proche et, après avoir atteint le point de référence proche à y approximativement égal à -12 mm, atteint une zone de vision de près avec un effet constant;
- le verre de poste de travail comporte un couloir progressif avec une largeur de couloir progressive au centre de la vitre d'au moins 4 mm et une largeur de couloir progressive dans la zone de vision de près au point de référence proche d'au moins 15 mm, la largeur de couloir progressif minimale étant au moins 4 mm et dans lequel les largeurs de couloir progressives sont chaque fois définies en tant que distance horizontale entre les isolignes de l'astigmatisme de surface correspondant à la valeur de l'addition / 3;
- l'effet diminue du centre du verre jusqu'à y approximativement égal à +10 mm et approximativement égal à +12 mm au-dessus du centre du verre;
- le verre du poste de travail a une longueur de progression d'environ 20 mm à environ 25 mm, la longueur de progression représentant la distance verticale entre les points de la ligne principale ayant les valeurs de réfraction de surface les plus grandes et les plus petites; et
- le verre du poste de travail a une longueur de progression principale d'environ 7 mm à environ 12 mm, la longueur de progression principale étant le quotient d'addition, qui correspond à la différence des puissances de réfraction aux points de la ligne principale présentant les valeurs de réfraction de surface les plus grandes et les plus petites, et le gradient d'indice de réfraction maximum sur la ligne principale.

2. Verre de poste de travail selon la revendication 1, **caractérisé en ce que** l'indice de variation, qui est défini comme le quotient de la différence d'effet maximale et de la distance de la modification d'effet, est supérieur à 0,07 dpt / mm.

3. Verre de poste de travail selon l'une des revendications précédentes, dans lequel le couloir de progression au centre du verre a une largeur d'au moins 4,5 mm.

4. Verre de poste de travail selon l'une des revendications précédentes, dans lequel le couloir de progression a une largeur d'au moins 15,5 mm à proximité.

5. Verre de poste de travail selon l'une des revendications précédentes, dans lequel la longueur de progression principale est comprise entre environ 7 et environ 10 mm.

6. Verre de poste de travail selon l'une des revendications précédentes, dans lequel la largeur minimale du couloir de progression est d'au moins 4,5 mm.

7. Verre de poste de travail selon l'une des revendications précédentes, dans lequel le changement d'effet est obtenu par le changement de la valeur de la puissance surfacique sur la surface avant ou sur la surface arrière ou sur les surfaces avant et arrière.

8. Utilisation d'une verre de poste de travail pour corriger le défaut de vision d'un utilisateur, avec une zone de distance, une zone de proximité et une zone de progression disposées entre la zone de distance et la zone de proximité, spécialement adapté à la vision sur l'écran et dans lequel l'effet de la lentille augmente de façon continue à partir de la valeur d'un point de référence distant, situé dans la zone de distance à la valeur d'un point de référence proche, situé dans la zone de proximité, dans lequel l'effet augmente de manière continue le long d'une courbe torsadée vers le nez, appelée ci-après ligne principale, qui n'est pas une ligne de nombril, dans laquelle:
- l'effet augmente du centre du verre à la coordonnée verticale y approximativement égal à 0 jusqu'au point de référence proche et, après avoir atteint le point de référence proche à y approximativement égal à -12 mm, atteint une zone de vision de près avec un effet constant;
- le verre de poste de travail comporte un couloir progressif avec une largeur de couloir progressive au centre de la vitre d'au moins 4 mm et une largeur de couloir progressive dans la zone de vision de près au point de référence proche d'au moins 15 mm, la largeur de couloir progressif minimale étant au moins 4 mm et dans lequel les largeurs de couloir progressives sont chaque fois définies en tant que distance horizontale entre les isolignes de l'astigmatisme de surface correspondant à la valeur de l'addition / 3;
- l'effet diminue du centre du verre jusqu'à y approximativement égal à +10 mm et approximativement égal à +12 mm au-dessus du centre du verre;
- le verre du poste de travail a une longueur de progression d'environ 20 mm à environ 25 mm, la longueur de progression représentant la distance verticale entre les points de la ligne principale ayant les valeurs de réfraction de surface les plus grandes et les plus petites; et
- le verre du poste de travail a une longueur de progression principale d'environ 7 mm à environ 12 mm, la longueur de progression principale étant le quotient d'addition, qui correspond à la différence des puissances de réfraction aux points de la ligne principale présentant les valeurs de réfraction de surface les plus grandes et les plus petites, et le gradient d'indice de réfraction maximum sur la ligne principale.
